# EUROPÄISCHE PATENTANMELDUNG

(11) **EP 2 719 491 A2**
(43) Veröffentlichungstag der Anmeldung: **16.04.2014**
(21) Anmeldenummer: 13003409.3
(22) Anmeldetag: 05.07.2013
(51) Int. Cl.: B23F 23/12

(54) **Verfahren zum Wechseln eines Verzahnwerkzeugs mit zweiseitiger Lagerung bei einer Verzahnmaschine und Vorrichtung hierzu**

(30) Priorität: 15.10.2012 DE 102012020210
(71) Anmelder: LIEBHERR-VERZAHNTECHNIK GmbH, 87437 Kempten (DE)
(72) Erfinder: Zeller, Thomas, 87437 Kempten (DE)
(74) Vertreter: Laufhütte, Dieter

(57) **Zusammenfassung**

Die vorliegende Erfindung betrifft ein Verfahren zum Wechseln eines Verzahnwerkzeugs mit zweiseitiger Lagerung zwischen einem Werkzeugmagazin und einem Bearbeitungskopf mittels eines Werkzeugwechslers, unter Beibehalten der vertikalen Ausrichtung des Verzahnwerkzeugs entlang der vertikalen Z-Achse. Das erfindungsgemäße Verfahren umfasst folgende Schritte:
a. Wechseln des Verzahnwerkzeugs zwischen dem Werkzeugwechsler und der einen der beiden Vorrichtungen Werkzeugmagazin oder Bearbeitungskopf unter Beibehalten der vertikalen Ausrichtung des Werkzeugs,
b. Verfahren des Werkzeugwechslers und des Verzahnwerkzeugs zwischen dem Bearbeitungskopf und dem Werkzeugmagazin (oder umgekehrt) unter Beibehalten der vertikalen Ausrichtung des Verzahnwerkzeugs,
c. Wechseln des Verzahnwerkzeugs zwischen dem Werkzeugwechsler und der anderen der beiden Vorrichtungen Werkzeugmagazin oder Bearbeitungskopf unter Beibehalten der vertikalen Ausrichtung des Werkzeugs.

## Beschreibung

Die vorliegende Erfindung betrifft ein Verfahren zum Wechseln eines Verzahnwerkzeugs, hierbei insbesondere Fräs- und Schleifwerkzeuge, mit zweiseitiger Lagerung bei einer Verzahnmaschine und einer Vorrichtung hierzu.

Verfahren und Vorrichtungen zum Wechseln von Werkzeugen in Bearbeitungsmaschinen sind in der Industrie bekannt. Bearbeitungsmaschinen für metallbearbeitende Prozesse, wie zum Beispiel Verzahn-, Fräs- oder Drehmaschinen können dadurch mit vielfältigen Werkzeugen oder sonstigen Hilfsmitteln austauschbar bestückt werden. Zum Zwecke der Prozessoptimierung durch Automatisierung ist es üblich, spezielle Werkzeugwechsler zu verwenden. Diese stellen ein verbindendes Element zwischen einer Bearbeitungsmaschine und einem Werkzeugmagazin dar.

Es ist dabei Aufgabe des Werkzeugwechslers, ein für einen gegebenen Arbeitsschritt in der Bearbeitungsmaschine benötigtes Werkzeug vom Werkzeugmagazin zur Bearbeitungsmaschine zu transportieren und umgekehrt, gerade nicht mehr benötigte Werkzeuge von der Bearbeitungsmaschine zum Werkzeugmagazin zu transportieren, so dass das nicht mehr benötigte Werkzeug im Werkzeugmagazin eingelagert werden kann.

Durch die Verwendung eines solchen automatischen Werkzeugwechslers kann die Bearbeitungszeit des Werkstückes im Vergleich zu einem manuellen Werkzeugwechsel reduziert werden. Außerdem übernimmt der Werkzeugwechsler eine unter Umständen monotone, fehleranfällige und potentiell gefährliche Arbeit, die nun nicht mehr von einer Bedienperson ausgeführt werden muss.

Je nach Komplexität von Werkzeug, Werkzeuglager der Bearbeitungsmaschine und der Halteeinheit für das Werkzeug am Werkzeugmagazin sind unterschiedlich hohe Anforderungen an den Werkzeugwechsler gestellt.

Hierbei bedeuten hohe Anforderungen an den Werkzeugwechsler in der Regel sowohl erhöhte Anschaffungskosten als auch erhöhte Kosten im laufenden Betrieb. Auch steigt mit der Komplexität des Werkzeugwechslers dessen Anfälligkeit für Betriebsstörungen und die Kosten zu deren Behebung.

Es ist daher Aufgabe der vorliegenden Erfindung, ein verbessertes Verfahren und eine verbesserte Vorrichtung zum Wechseln eines Verzahnwerkzeugs, hierbei insbesondere Fräs- und Schleifwerkezuge, bereitzustellen.

Diese Aufgabe wird erfindungsgemäß durch ein Verfahren zum Wechseln eines Verzahnwerkzeugs mit den Merkmalen des Patentanspruchs 1 gelöst.

Es ist vorteilhaft, wenn die Ausrichtung des Verzahnwerkzeugs während des Werkzeugwechselvorgangs möglichst wenig verändert wird, weil zu den Wechseln des Verzahnwerkzeugs zwischen Werkzeugmagazin, Bearbeitungskopf und Werkzeugwechsler in der Regel eine präzise Ausrichtung oder Positionierung innerhalb der entsprechenden Werkzeughalterungen erforderlich ist. Weicht die Ausrichtung oder Positionierung des Verzahnwerkzeugs von dem zulässigen Wert ab, so ist es möglich, dass ein korrekter Wechselvorgang nicht durchgeführt werden kann, da zum Beispiel das Verzahnwerkzeug nicht korrekt von der Werkzeughalterung des Bearbeitungskopfes gegriffen werden kann oder verrutscht. Je weniger während des Wechselvorgangs an der Ausrichtung des Verzahnwerkzeugs geändert wird, umso geringer ist die Gefahr einer fehlerhaften Ausrichtung des Verzahnwerkzeugs, insbesondere wenn die Wechselpositionen des Verzahnwerkzeugs bei den Wechseln des Verzahnwerkzeugs zwischen Werkzeugmagazin, Bearbeitungskopf und Werkzeugwechsler identisch sind.

Prinzipiell kann ein Verzahnwerkzeug in Abhängigkeit von der Bauart des Werkzeugwechslers während eines Wechselvorgangs gemäß seiner 6 Freiheitsgrade in 6 Richtungen bewegt werden. Es können entsprechend in allen 6 Bewegungsrichtungen betriebsbedingte Abweichungen zwischen Soll- und Istwerten der Bewegung des Verzahnwerkzeugs entstehen, die einen korrekten Wechselvorgang unmöglich machen. Die der Erfindung zu Grunde liegende Einschränkung der Freiheitsgrade verringert die Gefahr solcher Abweichungen.

Die vertikale Ausrichtung des Verzahnwerkzeugs während des gesamten Wechselvorgangs ist gleichbedeutend mit der Ausrichtung des Werkzeugs entlang der Z-Achse, welche der Richtung der Gravitationskraft entspricht und ist gleichzeitig gleichbedeutend mit der Eliminierung der rotativen Freiheitsgrade um die X- und Y-Achse. Diese Ausrichtung des Verzahnwerkzeugs hat zur Folge, dass der Massenschwerpunkt des Verzahnwerkzeugs in möglichst kurzer horizontaler Entfernung vom Haltebereich des Verzahnwerkzeugs entfernt ist, an den das Verzahnwerkzeug vom Greifer gehalten wird. Durch eine derartige Lagerung des Verzahnwerkzeugs im Greifer wird eine Minimierung des Drehmoments erreicht, welches vom Verzahnwerkzeug sonst aufgrund der Schwerkraft und der Entfernung zwischen Haltebereich und Massenschwerpunkt des Verzahnwerkzeugs auf den Greifer ausgeübt wird. Bei entsprechender Positionierung ist es ohne weiteres möglich, das auf den Greifer wirkende Drehmoment nahe oder bei null zu halten.

Erfindungsgemäß dient das Verfahren zum Transport des Verzahnwerkzeugs von einer ersten Vorrichtung zu einer zweiten Vorrichtung. In einer bevorzugten Ausführungsform kann die erste Vorrichtung ein Werkzeugmagazin und die zweite Vorrichtung ein Bearbeitungskopf sein. In einem weiteren bevorzugten Ausführungsbeispiel kann die erste Vorrichtung eine Bearbeitungskopf und die zweite Vorrichtung ein Werkzeugmagazin sein.

Die vorliegende Erfindung ist prinzipiell bei allen Arten von Bearbeitungsmaschinen und Werkzeugen anwendbar. Jedoch kann eine Anwendung im Bereich von Verzahnmaschinen und den dazugehörigen Verzahnwerkzeugen besonders vorteilhaft erfolgen, da die großen Drehmomente, die von den dabei vorliegenden großen Verzahnwerkzeuggewichten in die Vorrichtung eingeleitet werden erfindungsgemäß minimiert werden können. Prinzipiell kommen zwar verschiedenste Werkzeuge für die Ausführung der Erfindung in Frage, so sind damit erfindungsgemäß Fräs- und Schleifwerkzeuge gemeint.

Ferner ist eine Ausführungsform denkbar, in der der Bearbeitungskopf das Verzahnwerkzeug direkt an das Werkzeugmagazin übergibt, ohne dass dafür ein von der Verzahnmaschine getrennter Werkzeugwechsler bereitgestellt ist.

Es sind verschiedene Mechanismen denkbar, die beim Wechseln des Verzahnwerkzeugs zwischen Bearbeitungskopf und Werkzeugwechsler eingesetzt werden können und die ein sicheres und lösbares Verbinden des Verzahnwerkzeugs mit dem Bearbeitungskopf ermöglichen. Es muss lediglich sichergestellt sein, dass das Verzahnwerkzeug mit dem Bearbeitungskopf automatisch so verbunden werden kann, dass die Bearbeitung eines Werkstücks möglich ist.

Zum Verbinden des Verzahnwerkzeugs mit bzw. zum Lösen des Verzahnwerkzeugs vom Bearbeitungskopf ist es daher besonders vorteilhaft, dass das Wechseln des Verzahnwerkzeugs zwischen dem Bearbeitungskopf und dem Werkzeugwechsler das Bewegen eines Werkzeughauptlagers und/oder eines Werkzeuggegenlagers und/oder einer Werkzeugklemmung umfasst.

Umgekehrt wird auf Seite des Werkzeugmagazins das Verzahnwerkzeug mit dem Magazin verbunden bzw. davon gelöst. Generell kommen dabei unterschiedliche Magazintypen für die erfindungsgemäße Ausführung des Verfahrens in Frage. Sowohl die bekannten Scheibenmagazine als auch Kettenmagazine sind bei der Ausführung der Erfindung denkbar. Auch sind Ablagemagazine vorstellbar, bei denen die Verzahnwerkzeuge lediglich abgelegt werden, ohne dabei von einer aktiven Haltevorrichtung gegriffen zu werden. Ausschlaggebend ist lediglich, dass beim Werkzeugwechsel zwischen Magazin und Werkzeugwechsler eine vertikale Ausrichtung des Werkzeugs gegeben ist.

In einer Ausführungsform umfasst das Verfahren ein Werkzeugmagazin, in welchem die Verzahnwerkzeuge vertikal hängend gelagert werden. Die Verzahnwerkzeuge können dabei auf unterschiedliche Art mit dem Werkzeugmagazin verbunden sein. Denkbar sind Klemmverbindungen, Steckverbindungen, magnetische Verbindungen oder sonstige Mittel, die dazu geeignet sind, das Verzahnwerkzeug lösbar mit dem Werkzeugmagazin zu verbinden. In einer vorteilhaften Ausführungsform ist wenigstens eine Halteeinheit zum Halten des Verzahnwerkzeugs derart bereitgestellt, dass das Wechseln des Verzahnwerkzeugs zwischen dem Werkzeugmagazin und dem Werkzeugwechsler ein nach unten Verfahren und ein nach oben Verfahren der Halteeinheit für das Verzahnwerkzeug im Werkzeugmagazin umfasst.

Denkbar sind ferner unterschiedliche weitere Schritte, die im Rahmen des Transports des Verzahnwerkzeugs von einer Vorrichtung zur anderen Vorrichtung erfolgen können. Dabei kann es sich um Schritte handeln, in denen zum Beispiel Messungen an dem Verzahnwerkzeug oder dem Werkstück vorgenommen werden, oder es können Schritte zum dauerhaften Entfernen abgenutzter oder beschädigter Verzahnwerkzeuge, zum Einführen neuer Verzahnwerkzeuge oder Reinigungsschritte an dem benutzten Verzahnwerkzeug oder dem Werkzeugwechsler, dem Werkzeugmagazin oder dem Bearbeitungskopfvorgenommen werden.

Da bei der Metallbearbeitung und hier vor allem bei den eingangs erwähnten zerspanenden Technologien wie Fräsen und Drehen erhebliche Mengen an Spänen und Kühlflüssigkeit anfallen können, ist es üblich, Reinigungsprozesse im Rahmen des Betriebs der Verzahnmaschine durchzuführen. Die Reinigungsprozesse können dabei die Verzahnmaschine aber auch die Verzahnwerkzeuge betreffen, so dass es vorgesehen sein kann, zwischen dem Entnehmen oder Einlegen und dem Transport des Verzahnwerkzeugs eine Reinigung vorzunehmen. Im Speziellen kann vorgesehen sein, dass das Wechseln des Verzahnwerkzeugs zwischen dem Werkzeugmagazin und dem Werkzeugwechsler ein Verfahren einer Schlitteneinheit mit Greifer in Richtung einer Kegelreinigungsposition, ein Verfahren einer Reinigungseinheit aus einer Ausgangsposition in eine Reinigungsposition, ein Vornehmen einer Reinigung des Verzahnwerkzeugs und ein Verfahren der Reinigungseinheit von der Reinigungsposition in die Ausgangsposition umfasst.

Besonders bevorzug ist es, wenn zwischen den Schritten des Werkzeugwechsels zwischen Bearbeitungskopf und Werkzeugwechsler und des Werkzeugwechsels zwischen Werkzeugwechsler und Werkzeugmagazin eine Reinigung des Verzahnwerkzeugs in einer Reinigungsposition durchgeführt wird.

Die Erfindung betrifft ferner einen Werkzeugwechsler, der zur Durchführung eines Verfahrens nach den Ansprüchen 1 bis 7 ausgebildet ist. Entsprechend der Beschreibung ist vorgesehen, dass der Werkzeugwechsler wenigstens die Elemente umfasst: einen Greifer und eine Schlitteneinheit mit einem oberen Schlitten, einem mittleren Schlitten und einem unteren Schlitten, wobei der Greifer an dem oberen Schlitten angeordnet ist, wobei der obere Schlitten durch den mittleren Schlitten verfahrbar ist und wobei der obere und der mittlere Schlitten durch den unteren Schlitten entlang einer Führungsschiene verfahrbar sind. Es kann auch der mittlere Schlitten entfallen, wobei dann der untere Schlitten die Funktion des mittleren Schlitten zusätzlich übernimmt.

Weitere Einzelheiten und Vorteile der Erfindung werden anhand eines in der Zeichnung dargestellten Ausführungsbeispiels näher erläutert. Es zeigen:
- Figur 1:: einen Werkzeugwechsler mit Werkzeugmagazin und Fräswerkzeugen,
- Figur 2:: eine Verzahnmaschine und
- Figur 3:: eine Anordnung von Werkzeugwechsler, Werkzeugmagazin, Verzahnmaschine und Fräswerkzeugen.

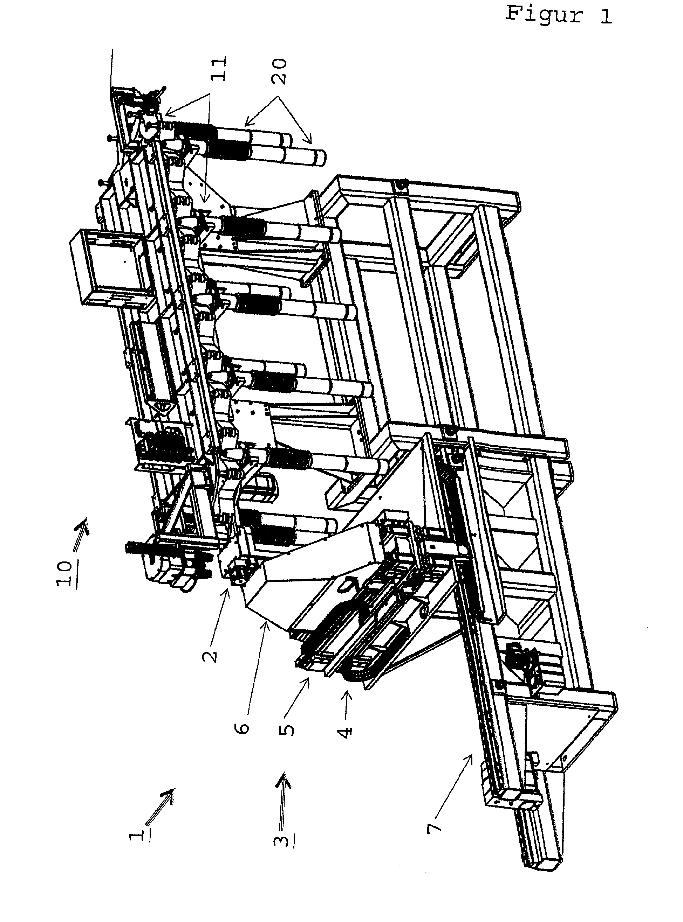

Figur 1 zeigt eine Anordnung eines Werkzeugwechslers 1 und eines Werkzeugmagazins 10. Der Werkzeugwechsler 1 umfasst einen Greifer 2 sowie eine Schlitteneinheit 3, die aus einem oberen Schlitten 6, einem mittleren Schlitten 5 und einem unteren Schlitten 4 besteht. Der Greifer 2 ist dabei am oberen Schlitten 6 angeordnet. Die Schlitteneinheit 3 samt Greifer 2 ist entlang einer Führungsschiene 7 verfahrbar angeordnet.

Das Werkzeugmagazin 10 umfasst wenigstens eine Halteeinheit 11, die nach oben und nach unten verfahrbar ist und in welcher die Fräswerkzeuge 20 lagerbar sind.

Der Werkzeugwechsler 1 befindet sich in Figur 1 in einer Position im Bereich des Werkzeugmagazins 10, in welcher ein Fräswerkzeug 20 zwischen dem Werkzeugmagazin 10 und dem Werkzeugwechsler 1 gewechselt werden kann.

Wie in Figur 1 ersichtlich, erfolgt die Lagerung der Fräswerkzeuge 20 in vertikaler Ausrichtung. Die in Figur 1 dargestellte Wechselsituation zwischen Werkzeugwechsler 1 und Werkzeugmagazin 10 verdeutlicht, dass auch in dem Wechselmoment, in welchem sowohl der Greifer 2 als auch die Halteeinheit 11 mit dem Fräswerkzeug 20 in Kontakt sind, eine vertikale Ausrichtung des Fräswerkzeugs 20 vorliegt.

Es erschließt sich aus der Figur außerdem, dass sowohl in die Halteeinheit 11 als auch in den Greifer 2 durch das Gewicht des Fräswerkzeugs 20 vorrangig vertikal wirkende Kräfte und keine Drehmomente eingeleitet werden.

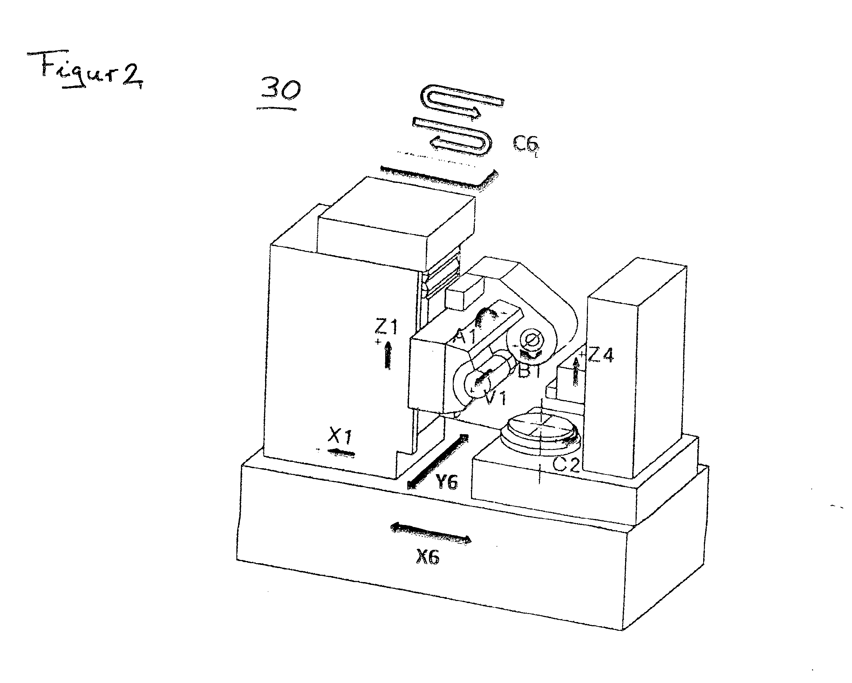

Figur 2 zeigt eine Verzahnmaschine 30 mit den Raumachsen X, Y und Z sowie den entsprechenden Rotationsrichtungen A, B und C.

A1 bezieht sich dabei auf eine Schwenkrichtung eines Bearbeitungskopfs, B1 gibt die Werkzeugachse an, diese entspricht der Drehachse des Hauptantriebs. V1 gibt die Tangentialverschiebung, X1 die Radialachse und Z1 die Axialachse des Bearbeitungskopf an. C2 ist die Werkstückachse. Z4 gibt die Bewegungsachse der Gegenhalterarmbewegung an. C6 ist eine Drehachse eines Werkzeugmagazins mit Kettenantrieb. Y6 ist eine translatorische Bewegungsachse des mittleren Schlittens 5 und des oberen Schlittens 6, X6 eine translatorische Bewegungsachse der kompletten Schlitteneinheit 3.

Die Verzahnmaschine 30 verfügt über Mittel zum Lagern von Fräswerkzeugen 20. Diese können beispielsweise als Werkzeughauptlager und Werkzeuggegenlager ausgebildet sein. Werkzeughaupt- und Werkzeuggegenlager können dabei auf getrennten Achsen angeordnet sein. Das Werkzeuggegenlager kann derart ausgestaltet sein, dass es zum Werkzeugwechsel ausfahrbar ist. Des Weiteren kann zum sicheren Verbinden von Fräswerkzeugen 20 mit der Verzahnmaschine 30 eine Werkzeugklemmung vorgesehen sein.

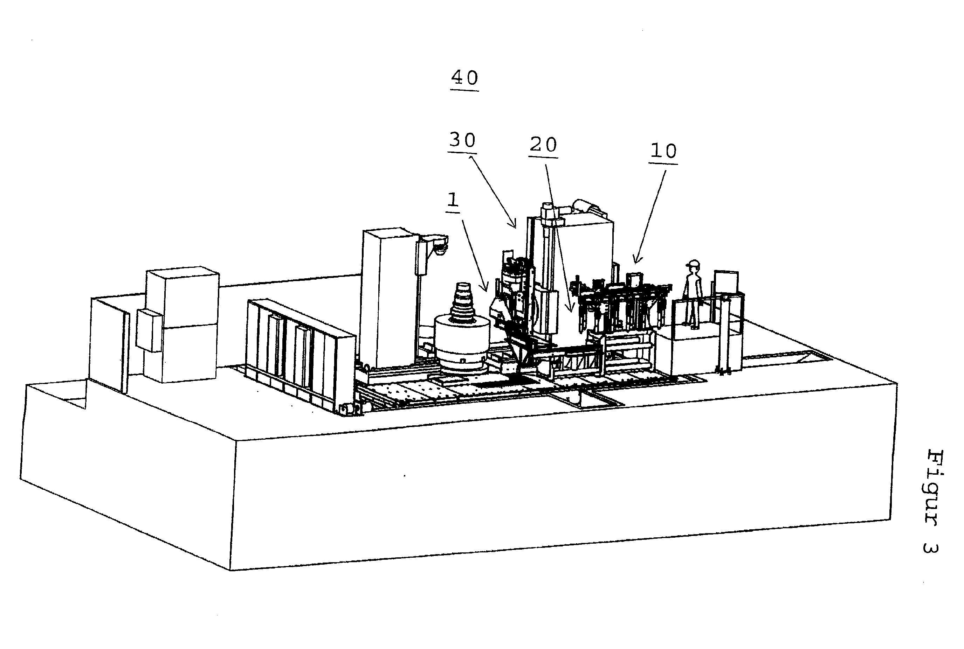

Figur 3 zeigt eine Gesamtanordnung 40 von Werkzeugwechsler 1, Werkzeugmagazin 10 und Bearbeitungskopf 30. In der Darstellung befindet sich der Werkzeugwechsler 1 im Bereich des Bearbeitungskopfes 30.

Der Werkzeugwechsler 1 befindet sich in einer Position, in welcher ein Fräswerkzeug 20 zwischen Werkzeugwechsler 1 und dem Bearbeitungskopf 30 gewechselt werden kann. Der Bearbeitungskopf30 befindet sich in einer Werkzeugwechselposition, in welcher das Fräswerkzeug 20 in einer vertikalen Ausrichtung gewechselt werden kann.

Der Werkzeugwechsler 1 ist in dem Ausführungsbeispiel gemäß der Figur 1 mit einem einzigen Greifer 2 ausgestattet. Im Rahmen der Erfindung kann jedoch in hier nicht dargestellter Art und Weise am oberen Schlitten 6 eine Greifvorrichtung mit zwei Greifern vorgesehen sein. Mit einem derart modifizierten Werkzeugwechsler 1 kann ein für die Bearbeitung vorgesehenes Verzahnwerkzeug aufgenommen werden und zum Bearbeitungskopf transportiert werden. Am Bearbeitungskopf kann das benutzte Verzahnwerkzeug vom Werkzeugwechsler 1 aufgenommen werden. Durch eine entsprechende Dreh-/Verschiebebewegung kann der am Werkzeugwechsler 1 angeordnete doppelt ausgeführte Greifer verschwenkt werden, so dass der das neue Verzahnwerkzeug tragende Greifer dieses in dem Bearbeitungskopf einspannt. Nach Einspannen des neuen Verzahnwerkzeugs kann das benutzte Verzahnwerkzeug, das vorab aufgenommen wurde zum Werkzeugmagazin 10 zurücktransportiert werden.

## Patentansprüche

1. Verfahren zum Wechseln eines Verzahnwerkzeugs mit zweiseitiger Lagerung zwischen einem Werkzeugmagazin und einem Bearbeitungskopf mittels eines Werkzeugwechslers, unter Beibehalten der vertikalen Ausrichtung des Verzahnwerkzeugs entlang der vertikalen Z-Achse, umfassend die Schritte:
a. Wechseln des Verzahnwerkzeugs zwischen dem Werkzeugwechsler und der einen der beiden Vorrichtungen Werkzeugmagazin oder Bearbeitungskopf unter Beibehalten der vertikalen Ausrichtung des Werkzeugs,
b. Verfahren des Werkzeugwechslers und des Verzahnwerkzeugs zwischen dem Bearbeitungskopf und dem Werkzeugmagazin (oder umgekehrt) unter Beibehalten der vertikalen Ausrichtung des Verzahnwerkzeugs,
c. Wechseln des Verzahnwerkzeugs zwischen dem Werkzeugwechsler und der anderen der beiden Vorrichtungen Werkzeugmagazin oder Bearbeitungskopf unter Beibehalten der vertikalen Ausrichtung des Werkzeugs.

2. Verfahren nach Anspruch 1, **dadurch gekennzeichnet, dass** das Wechseln des Verzahnwerkzeugs zwischen dem Bearbeitungskopf und dem Werkzeugwechsler das Bewegen eines Werkzeughauptlagers und/oder eines Werkzeuggegenlagers und/oder einer Werkzeugklemmung umfasst.

3. Verfahren nach einem der Ansprüche 1 oder 2, **dadurch gekennzeichnet, dass** das Wechseln des Verzahnwerkzeugs zwischen dem Werkzeugmagazin und dem Werkzeugwechsler ein nach unten Verfahren und ein nach oben Verfahren einer Halteeinheit für das Verzahnwerkzeug im Werkzeugmagazin umfasst.

4. Verfahren nach einem der Ansprüche 1 bis 3, **dadurch gekennzeichnet, dass** zwischen den Schritten des Werkzeugwechsels zwischen Verzahnmaschine und Werkzeugwechsler und des Werkzeugwechsels zwischen Werkzeugwechsler und Werkzeugmagazin eine Reinigung des Verzahnwerkzeugs in einer Reinigungsposition durchgeführt wird.

5. Werkzeugwechsler, der zur Durchführung eines Verfahrens nach den Ansprüchen 1 bis 4 ausgebildet ist, umfassend einen Greifer und eine Schlitteneinheit mit einem oberen Schlitten, einem mittlerer Schlitten und einem unteren Schlitten, wobei der Greifer an dem oberen Schlitten angeordnet ist, wobei der obere Schlitten durch den mittleren Schlitten verfahrbar ist und wobei der obere und der mittlere Schlitten durch den unteren Schlitten entlang einer Führungsschiene verfahrbar sind oder alternativ mittlere Schlitten entfällt und der untere Schlitten dann die Funktion des mittleren Schlittens zusätzlich übernimmt.
